# EUROPÄISCHE PATENTSCHRIFT

(11) **EP 1 105 241 B1**
(45) Veröffentlichungstag und Bekanntmachung des Hinweises auf die Patenterteilung: **12.03.2003**
(21) Anmeldenummer: 99948708.5
(22) Anmeldetag: 28.07.1999
(51) Int. Cl.: B23D 1/00

(54) **WERKZEUGMASCHINE, INSBESONDERE FRÄSBEARBEITUNGSZENTRUM**
MACHINE-TOOL, ESPECIALLY MILLING CENTER
MACHINE-OUTIL, EN PARTICULIER CENTRE DE FRAISAGE

(30) Priorität: 13.08.1998 DE 19836624
(43) Veröffentlichungstag der Anmeldung: 13.06.2001
(73) Patentinhaber: StarragHeckert GmbH, 09117 Chemnitz (DE)
(72) Erfinder: PÖNISCH, Achim, D-09573 Erdmannsdorf (DE)
(74) Vertreter: Rumrich, Gabriele
(86) Internationale Anmeldenummer: DE9902317
(87) Internationale Veröffentlichungsnummer: WO00009285

(56) Entgegenhaltungen:
- EP-A- 0 668 130
- EP-A- 0 925 870
- DE-A- 19 609 072
- US-A- 4 435 116
- US-A- 4 453 883

## Beschreibung

Die Erfindung betrifft eine Werkzeugmaschine, insbesondere Fräsbearbeitungszentrum, mit einem Gestell, einem Träger für Werkzeuge oder Werkstücke, einer vom Gestell ausgehenden Koppelführung, um den Träger bei Aufrechterhaltung seiner durch eine in einer ersten Ebene befindlichen Ausrichtachse definierten räumlichen Ausrichtung im Raum flächenüberstreichend zu führen, und einer vom Gestell ausgehenden Antriebseinrichtung, um den koppelgeführten Träger im Raum zu bewegen und festzulegen.

Werkzeugmaschinen mit koppelgeführten Trägern sind gegenüber jenen mit führungs (schienen)geführten Trägern flexibler, leichter und dynamischer, was zum einen auf den Wegfall der sich über die gesamten Kurse erstreckenden Führungen einschließlich ihres Unterbaus und ihrer Abdeckungen und Abstreifer und zum anderen auf die dadurch wesentlich geringere Angriffsfläche geführter Teile für Späne und Prozeßhilfsmittel zurückgeht.

Eine bekannte Vorrichtung zur Bearbeitung und/oder Montage von Werkstücken gemäß EP 0 812 652 A1 weist eine Koppelführung auf, die einem durch zwei Linearantriebe verstellbaren Träger eine ebene Bewegung erlauben. Bewegungen senkrecht zu dieser Ebene sind durch pinolenartige Ausbildung des Trägers und/oder separate Tischbewegungen realisiert. Beides ist wiederum mit den Nachteilen führungs (schienen) geführter Träger verbunden, wobei es hier die Führungen des Tisches und/oder der Pinole sowie die zugehörigen Abdeckungen und Abstreifer sind, die die erzielbaren Geschwindigkeiten und Beschleunigungen begrenzen.
Es sind auch Werkzeugmaschinen bekannt, die koppelgeführte Träger verwenden, ohne mit führungs (schienen) geführten Baugruppen zusammenzuwirken (z.B. US-A-4 453 883, US-A-4 435 116) und damit die oben angeführten Vorzüge der Koppelführungen aufweisen.

Eine optimale Bewegung und Ausrichtung des Trägers im Raum ist mit diesen Lösungen nicht zu erzielen.

Darüber hinaus sind auch Werkzeugmaschinen bekannt, bei denen der Träger durch eine Tripodanordnung im Raum bewegt und festgelegt wird (DE 196 09 072 A). Der Verzicht auf Koppelführungen erhöht den Steuerungsaufwand, die Kosten und den Platzbedarf.

In der EP-A-0 668 130 wird eine Vorrichtung mit Parallelstruktur beschrieben, die die gleichzeitige Sicherstellung der doppelten Funktion der Verschiebung und der Ausrichtung des koppelgeführten Trägers ermöglicht. Über drei Antriebsmechanismen werden drei Beweglichkeiten des Trägers gesteuert: zwei achsparallele Verschiebungen sowie eine Winkelposition.
Diese Vorrichtung ist vor allem auf die Anforderungen eines zylindrischen Arbeitsraumes ausgerichtet und weist dadurch ein eingeschränktes Anwendungsgebiet auf.

Der Erfindung liegt die Aufgabe zugrunde, eine gattungsgemäße Werkzeugmaschine zu schaffen,die bei leichter Bauweise höhere Geschwindigkeiten und Beschleunigungen zuläßt und gleichzeitig die Einsatzmöglichkeiten erweitert.

Erfindungsgemäß wird diese Aufgabe durch die Merkmale des Anspruchs 1 gelöst.

Die EP-A-0 925 870 stellt einen Stand der Technik gemäß Artikel 54(3) EPÜ dar und offenbart alle Merkmale des Anspruchs 1, bis auf die drei Gelenkachsen aufwelsende Koppel und die damit verbundene Anordnung der beiden Viergelenkketten.

Indem jeder durch ein kartesisches Koordinatentriple x, y, z beschreibbarer Punkt durch eine in der ersten Ebene flächenüberstreichend bewegbare und in der zweiten Ebene schwenkbare Koppelführung, die die drei Freiheitsgrade der Drehungen um die kartesischen Achsen x, y, z bindet, erreichbar und durch eine vom Gestell ausgehende Antriebseinrichtung, die die drei Freiheitsgrade der Verschiebungen längs der kartesischen Achsen x, y, z bindet, ansteuerbar ist, ist für die Bearbeitung eines Werkstückes weder eine pinolenartige Ausbildung des das Werkzeug oder das Werkstück tragenden Trägers noch eine mit dem Träger korrespondierende Bewegung einer das Werkstück bzw. das Werkzeug tragenden Vorrichtung, beispielsweise eines Tisches bzw. Werkzeughalters, erforderlich.
Gemäß einer Ausbildung der Erfindung liegen die Viergelenkketten in der ersten und/oder dazu parallelen Ebenen. Die gestellabgewandten Gelenkachsen zweier vom Gestell ausgehender gleichlanger erster Glieder der ersten Viergelenkkette und die trägerabgewandten Gelenkachsen zweier an den Träger führender gleichlanger zweiter Glieder der zweiten Viergelenkette liegen in einer die Viergelenkketten schließenden gemeinsamen Koppel.

Diese Koppel weist drei Gelenkachsen auf, um deren erste ein erstes Glied, um deren zweite sowohl ein anderes erstes als auch ein zweites Glied und um deren dritte ein anderes zweites Glied lagern. Darüber hinaus kann die Koppel auch zwischen den vom Gestell ausgehenden und/oder den an den Träger führenden Gliedern derart angeordnet sein, daß ihre Gelenkachsen von den gestell- bzw. trägergebundenen Gelenkachsen jeweils den gleichen Abstand aufweisen. Schließlich ist es vorgesehen, ein erstes und ein zweites Glied zur Aufnahme sowohl von Zug- und Druckkräften als auch von Biege- und Torsionskräften mit einem größeren Querschnitt auszustatten als das jeweils andere erste und zweite Glied, die lediglich Zug- und Druckkräfte aufnehmen.

Schließlich weist die Antriebseinrichtung Aktoren auf, die einerseits am Gestell und andererseits am Träger oder an den Viergelenkketten angelenkt sind, wobei sich die Gelenkabstände je Aktor verändern lassen. Sie umfassen vorzugsweise wenigstens drei in bezug auf das Gestell längenveränderliche Linearaktoren, die mit ihren einen Enden an voneinander beabstandeten Gestellpositionen und mit ihren anderen Enden am Träger angelenkt sind. Die Anlenkung erfolgt kardanisch und/oder kugelgelenkig. Die Anlenkpunkte sind in Richtung der Ausrichtachse gesehen jeweils um 120 Grad versetzt angeordnet. In einem zentralen Arbeitspunkt des Trägers schließen die Linearaktoren mit der Ausrichtachse Winkel von 45 Grad und mit den beiden Gelenkachsen des Kreuzgelenks Winkel von 90 Grad ein. Sie umfassen vorzugsweise jeweils eine drehantreibbare Mutter und eine axialverschiebliche drehfeste Gewindespindel, können aber auch als Lineardirektantriebe, Zahnstange-Ritzel-Antriebe, Arbeitszylinder und dgl. ausgebildet sein.

Der Träger ist vorzugsweise als Spindelstock ausgebildet, in dem eine Werkzeuge oder Werkstücke aufnehmende Arbeitsspindel lagert, deren Drehachse vorzugsweise mit der Ausrichtachse zusammenfällt. Er kann aber auch feststehende Werkzeuge oder Werkstücke tragen. Trägt der Träger ein Werkzeug, mit dem ein auf einem Werkstücktisch aufgenommenes Werkstück bearbeitbar ist, kann sich unter dem Werkstücktisch und um die Koppelführung und die Antriebseinrichtung ein raumfestes erstes Gehäuse und über dem Werkstücktisch ein wegklappbares zweites Gehäuse wölben, die gemeinsam ein cockpitartiges Gesamtgehäuse bilden, wobei wenigstens das zweite Gehäuse durchsichtig ist. Zwischen zwei Gliedern der Viergelenkketten kann eine Gewichtsausgleichseinrichtung angeordnet sein, die vorzugsweise als Druckfeder ausgebildet ist. Parallel zu den Viergelenkketten ist eine Energiezuführungskette geführt.

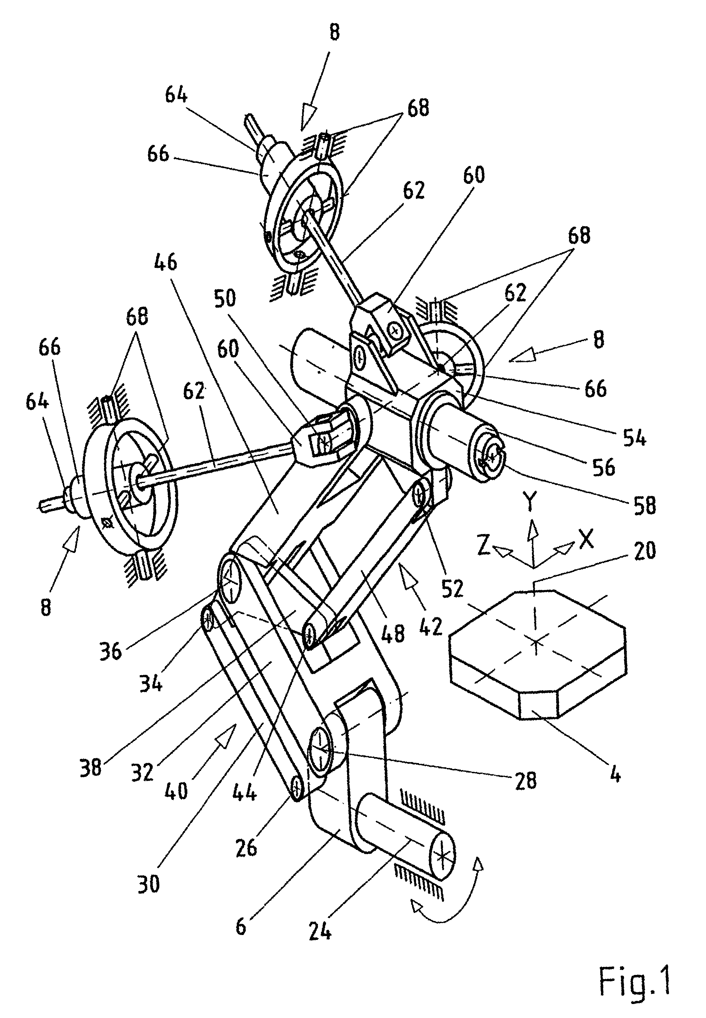

Fig. 1 eine dreidimensionale Darstellung eines erfindungsgemäßen Fräsbearbeitungszentrums, bei der aus Gründen der Übersichtlichkeit Gestell und Gehäuse weggelassen sind,
Fig. 2 eine Draufsicht des kompletten Fräsbearbeitungszentrum,
Fig. 3 eine Vorderansicht,
Fig. 4 eine Seitenansicht mit einer im Mittelpunkt der y-z-Arbeitsfläche befindlichen Spindel (Kursmitte y, z),
Fig. 5 die Spindel in einem ersten Eckpunkt (+y, +z) der y-z-Arbeitsfläche
Fig. 6 die Spindel in einem zweiten Eckpunkt (+y, -z),
Fig. 7 die Spindel in einem dritten Eckpunkt(-y, -z) und
Fig. 8 die Spindel in einem vierten Eckpunkt(-y, +z).

Das Fräsbearbeitungszentrum weist ein Gestell 2 auf, das in Reihenfolge einen Werkstücktisch 4, ein Schwenkstück 6, drei Hohlwellenmotoren 8 und einen Schaltschrank 10 aufnimmt und von einem Gehäuse 12 umgeben ist, welches selbst Bestandteil des Gestells 2 sein kann. Über dem Arbeitsraum 14 wölbt sich eine durchsichtige Kanzel 16, die mit dem Gehäuse 12 ein Cockpit 18 bildet und hochklappbar ist.

Der Werkstücktisch 4 ist gegebenenfalls um eine senkrechte Drehachse 20 drehbar. Er trägt ein Werkstück mit der maximalen äußeren Kontur 22.

Das Schwenkstück 6 ist um eine waagerechte Schwenkachse 24 schwenkbar, die die senkrechte Drehachse 20 des Werkstücktisches 4 schneidet.

An seinem in Richtung Werkstücktisch 4 ansteigenden Abschnitt lagern um Schwenkachsen 26 und 28, die lotrecht auf einer von der Drehachse 20 und der Schwenkachse 24 gebildeten Ebene stehen, eine gabelförmig ausgebildete Nebenkoppel 30 kleinen Querschnitts zur Aufnahme von Zugund Druckkräften und eine gleichlange gabelförmig ausgebildete Hauptkoppel 32 großen Querschnitts zur Aufnahme von Zug-, Druck-, Biege- und Torsionskräften. An deren gestellabgewandten Enden lagert um Schwenkachsen 34 und 36, die parallel zu den Schwenkachsen 26 und 28 verlaufen, ein dreieckförmiger Umlenkhebel 38. Hauptkoppel 30 und Nebenkoppel 32 bilden mit Abschnitten des Schwenkstücks 6 und des Umlenkhebels 38 eine Viergelenkkette 40, deren Parallelogrammstruktur sich daraus ableitet, daß der Achsabstand zwischen den Schwenkachsen 26 und 34 dem Achsabstand zwischen den Schwenkachsen 28 und 36 und der Achsabstand zwischen den Schwenkachsen 26 und 28 dem Achsabstand zwischen den Schwenkachsen 34 und 36 entspricht.

Der Umlenkhebel 38 bildet gleichzeitig ein Glied einer ebenfalls parallelogrammartigen Viergelenkkette 42. Dazu lagern an ihm um die Schwenkachse 36 und eine dazu parallele Schwenkachse 44 eine gabelförmig ausgebildete Hauptkoppel 46.großen Querschnitts zur Aufnahme von Zug-, Druck-, Biege- und Torsionskräften und eine gabelförmig ausgebildete gleichlange Nebenkoppel 48 kleinen Querschnitts zur Aufnahme von Zug- und Druckkkräften, während an deren anderen Enden um Schwenkachsen 50 und 52, die parallel zu den Schwenkachsen 36 und 44 verlaufen, ein Spindelstock 54 mit einer Motorspindel 56 lagert, deren Drehachse 58 parallel zur Schwenkachse 24 des Schwenkstücks 6 verläuft. Indem der Achsabstand zwischen den Schwenkachsen 36 und 50 dem Achsabstand zwischen den Schwenkachsen 44 und 52 und der Achsabstand zwischen den Schwenkachsen 36 und 44 dem Achsabstand zwischen den Schwenkachsen 50 und 52 entspricht, bildet auch die aus der Hauptkoppel 46 und der Nebenkoppel 48 sowie Abschnitten des Umlenkhebels 38 und des Spindelstocks 54 bestehende Viergelenkkette 42 ein Parallelogramm.

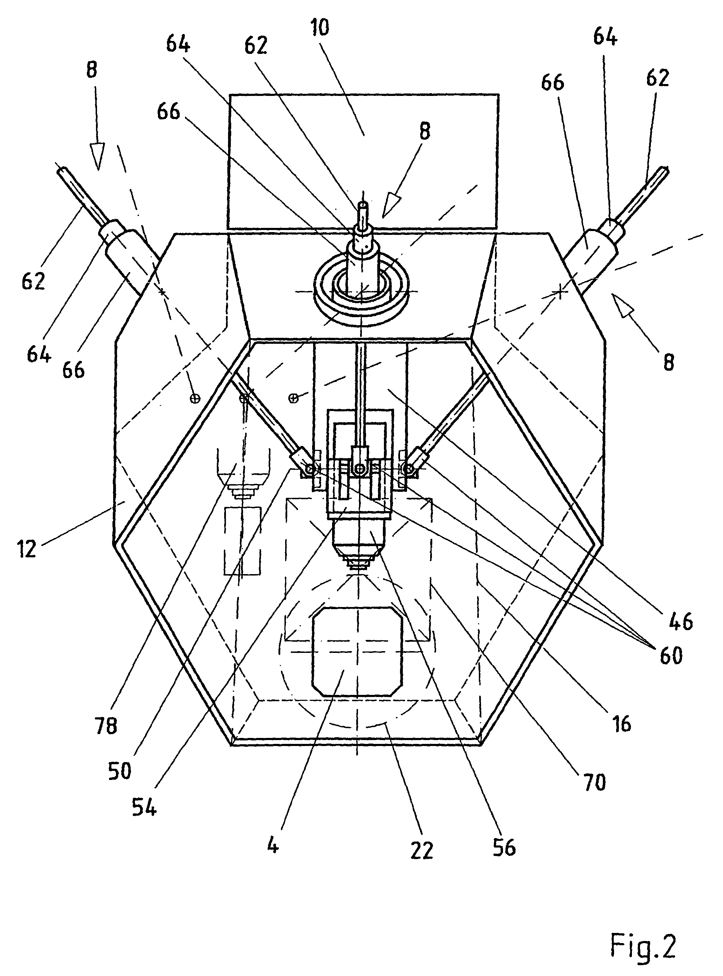

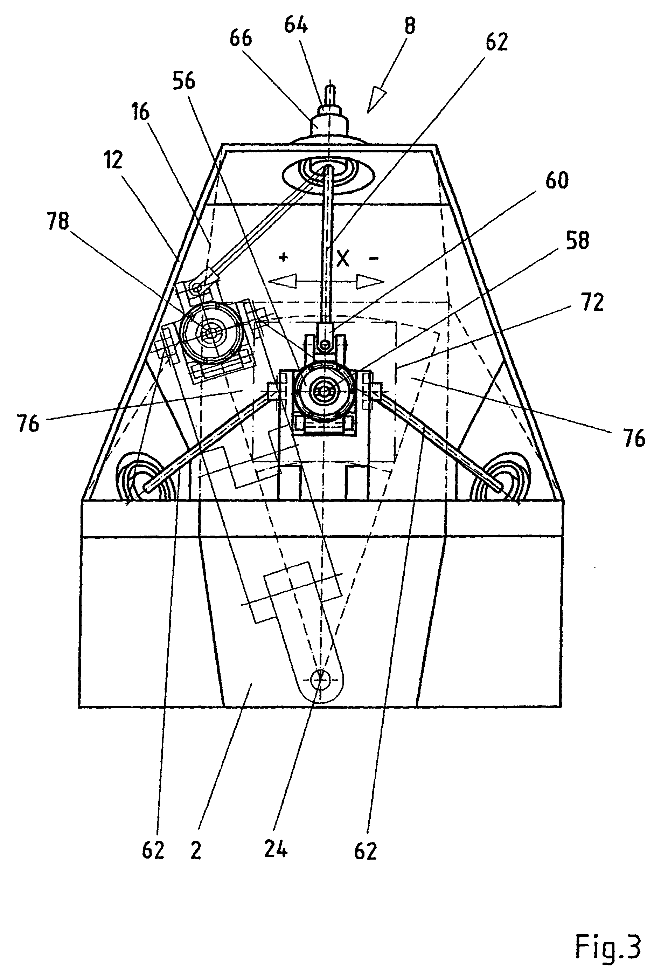

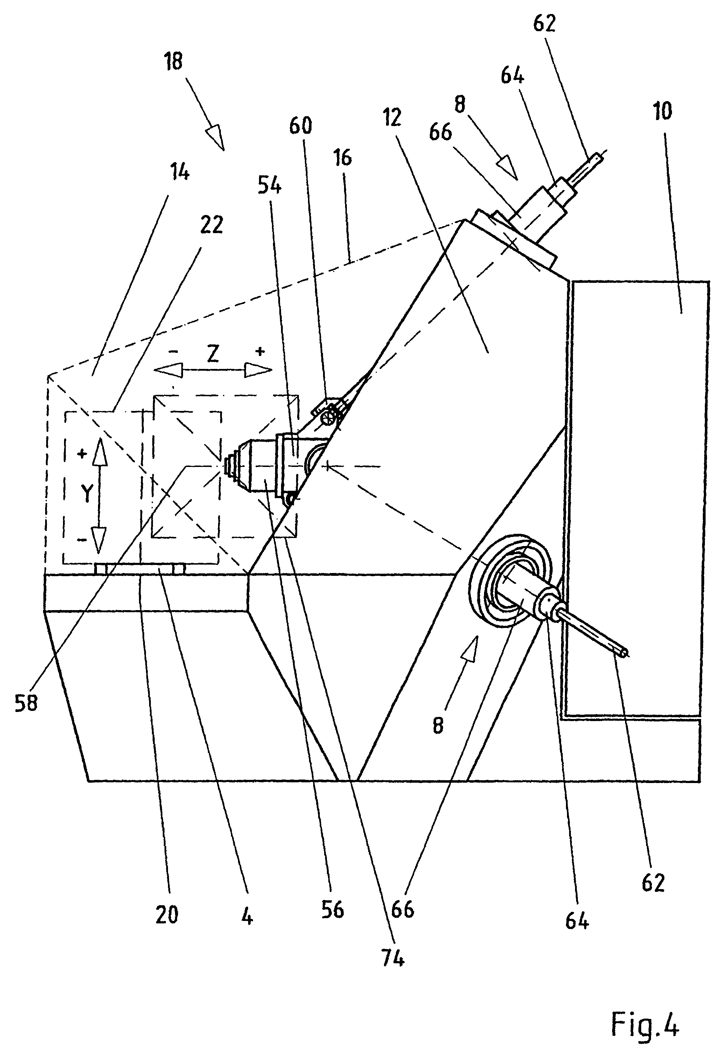

Am Spindelstock 54 sind an der Deckfläche und den beiden Seitenflächen mit Hilfe von Kreuzgelenken 60 insgesamt drei drehfeste Gewindespindeln 62 angelenkt, die in drehantreibbaren Spindelmuttern 64 der gestellseitigen Hohlwellenmotoren 8 laufen, deren Gehäuse 66 mit Hilfe von Kreuzgelenken 68 am Gestell 2 angelenkt sind. Von vorn auf die Motorspindel 56 gesehen, sind die gestellseitigen Anlenkpunkte jeweils um 120 Grad versetzt angeordnet. Befindet sich die Vorderkante der Motorspindel 56 im Schnittpunkt der Raumdiagonalen eines durch zueinander senkrechte Ebenen (x-y, x-z, y-z) begrenzten ansteuerbaren Arbeitsraumes, schließen die Gewindespindeln 62 mit der Drehachse 58 der Motorspindel 56 Winkel von 45 Grad und mit den beiden Gelenkachsen der Kreuzgelenke 68 Winkel von jeweils 90 Grad ein. In Fig. 2 ist die Arbeitsfläche in der x-z-Ebene mit 70, in Fig. 3 die Arbeitsfläche in der x-y-Ebene mit 72 und in den Fig. 4 bis 8 die Arbeitsfläche in der y-z-Ebene mit 74 bezeichnet. In den Fig. 2 und 3 ist zu erkennen, daß neben dem ansteuerbaren kubischen Arbeitsraum auch zwei ansteuerbare Randbereiche 76 existieren, die dem Werkzeug- und/oder Werkstückwechsel vorbehalten bleiben. In den Fig. 2 und 3 ist eine in Wechselposition befindliche Motorspindel mit 78 bezeichnet.

Parallel zu den Viergelenkketten 40 und 42 ist eine nichtdargestellte Energiekette geführt, die die Motorspindel 56 mit Energie versorgen. Eine zwischen den Gelenkachsen 52 und 28 angelenkte nichtdargestellte Druckfeder sorgt für Gewichtsausgleich.

Die Wirkungsweise ist folgende:

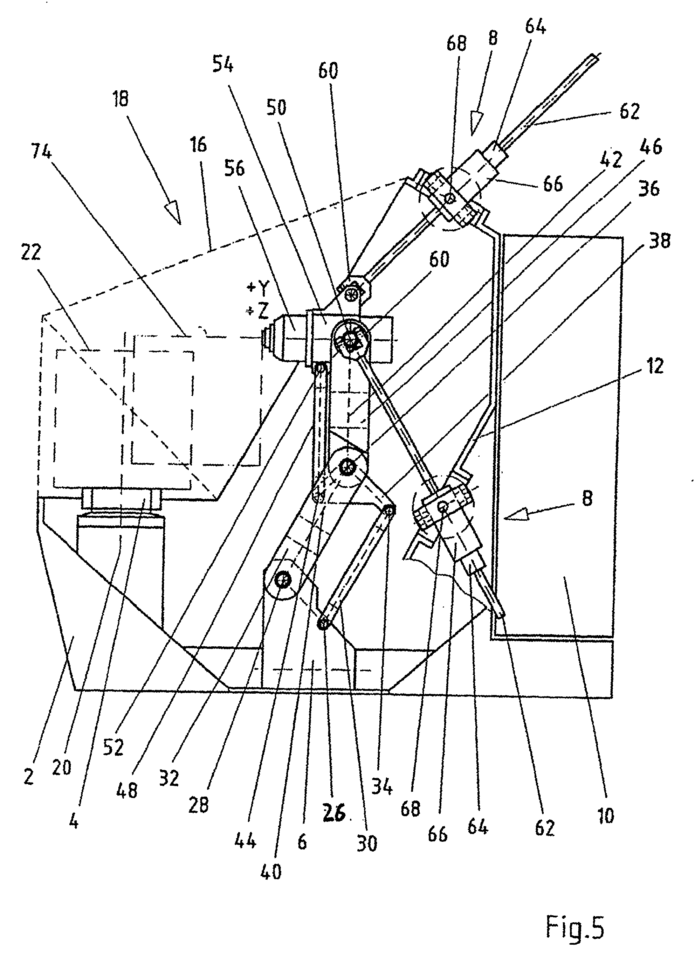

In einer hinteren oberen Position der Motorspindel 56 (Fig. 5) sind alle Gewindespindeln 62 eingefahren, haben die Koppeln 30 und 32 ihren größten und die Koppeln 46 und 48 ihren geringsten gegenseitigen Abstand.

Um die Motorspindel aus dieser Position heraus längs ihrer Drehachse in z-Richtung zu bewegen, werden die Spindelmuttern 64 mittels der Hohlwellenmotoren 8 derart gleichsinnig gedreht, daß die darin aufgenommenen drehfesten Gewindespindeln 62 in Richtung Arbeitsraum 14 (in bezug auf die y-z-Ebene) symmetrisch ausweichen, was nichts anderes heißt, als daß die Gewindespindeln in bezug auf das Gestell ihre Länge vergrößern. Alternativ könnte dies auch durch Teleskopanordnungen, Ritzel-Zahnstange-Paarungen, Arbeitszylinder und dgl. geschehen. Bei ihrer Bewegung in z-Richtung nimmt die Motorspindel 56 die miteinander verbundenen Viergelenkketten 40 und 42 mit, indem sich die Koppeln 30 und 32 unter Verringerung ihres gegenseitigen Abstands senkrecht aufrichten und die Koppeln 46 und 48 unter Vergrößerung ihres gegenseitigen Abstandes in Richtung Arbeitsraum 14 neigen, ohne daß die jeweils anderen gegenüberliegenden Glieder der parallelogrammartigen Viergelenkketten 40 und 42 wie der Umlenkhebel 38 und die Motorspindel 56 ihre Ausrichtung ändern.

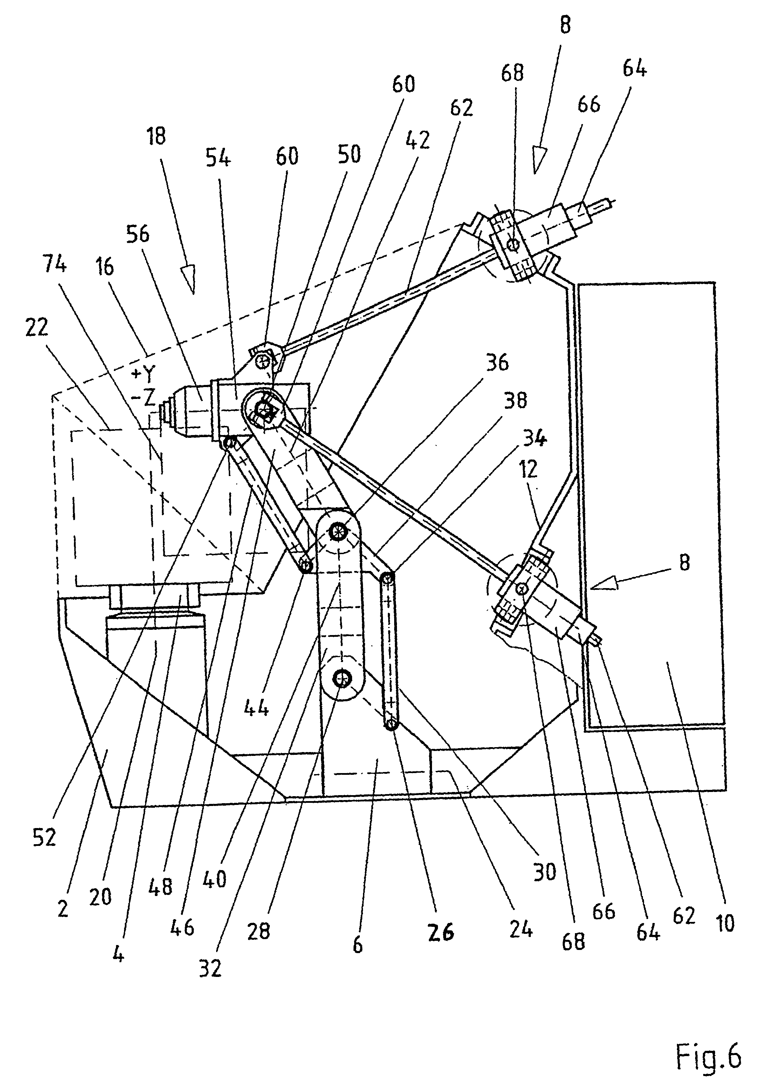

Um die Motorspindel 56 aus der in Fig. 6 gezeigten Position heraus in y-Richtung nach unten zu bewegen, werden die obere Gewindespindel 62 auf bereits beschriebene Weise ausgefahren und die beiden anderen Gewindespindeln 62 durch Drehrichtungsumkehr der Hohlwellenmotoren 8 (in bezug auf die y-z-Ebene) symmetrisch eingefahren. Dabei werden die miteinander verbundenen Viergelenkketten 40 und 42 mitgeführt, indem sich die Koppeln 30 und 32 unter Vergrößerung ihres gegenseitigen Abstands wieder in ihren Ausgangszustand zurückneigen und sich die Koppeln 46 und 48 unter Verringerung ihres gegenseitigen Abstandes weiter nach vorn neigen. Auch hierbei bleibt die Ausrichtung des Umlenkhebels 38 und der Motorspindel 56 erhalten.

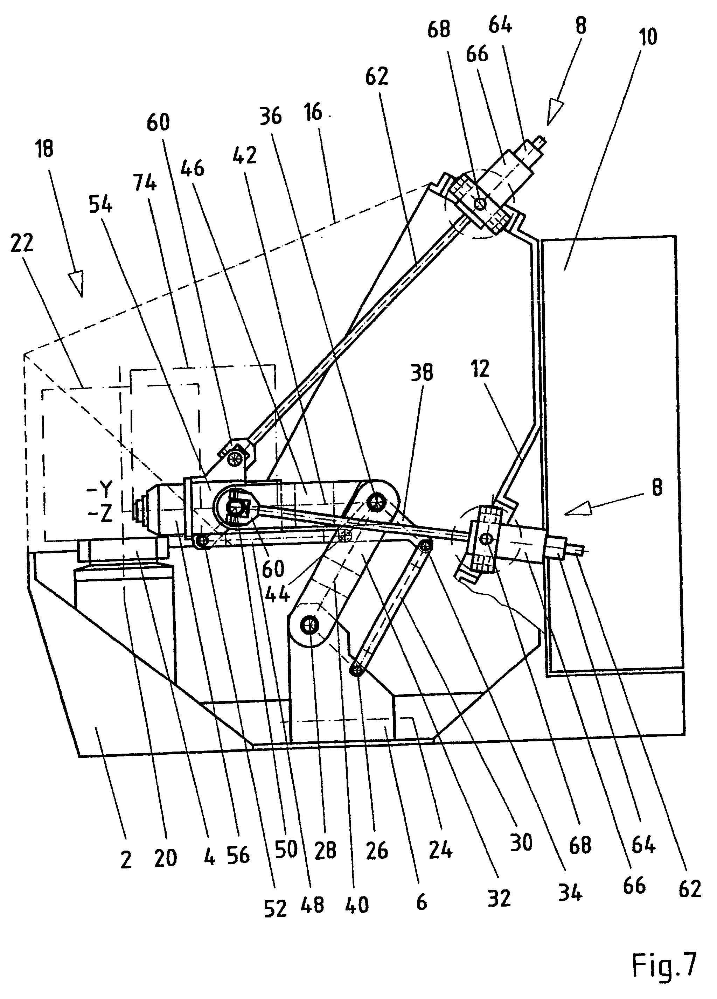

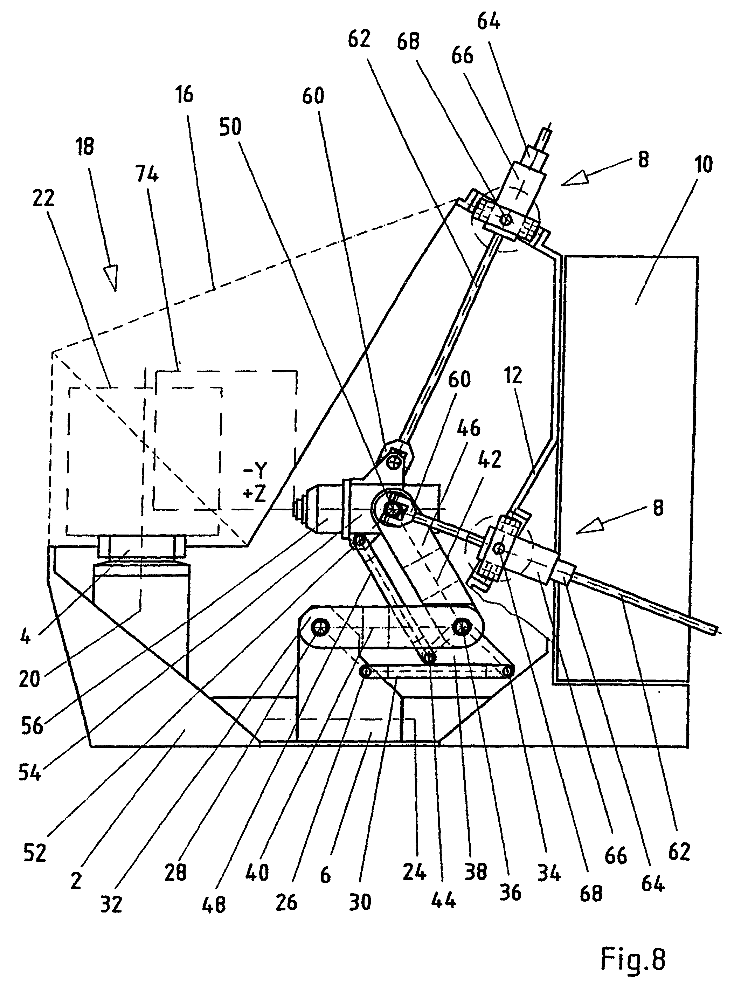

Um die Motorspindel 56 aus der in Fig.7 gezeigten Position heraus längs ihrer Drehachse in die in Fig. 8 gezeigte Position zu bewegen, werden alle Gewindespindeln 62 auf bereits beschriebene Weise (in bezug auf die y-z-Ebene) symmetrisch eingefahren, wobei die Viergelenkketten 40 und 42 auf ebenso beschriebene Weise mitgeführt werden.

Entsprechend lassen sich in der y-z-Ebene durch symmetrisches Aus- und Einfahren der Gewindespindeln 62 auch alle anderen Positionen einstellen.

Fährt man die Gewindespindeln 62 (in bezug auf die y-z-Ebene) unsymmetrisch ein und aus, wird die Motorspindel 56 auch in der zur y-z-Ebene senkrechten x-Richtung bewegt, wobei das Schwenkstück 6, das die verbundenen Viergelenkketten 40 und 42 samt Motorspindel 56 trägt, um die Schwenkachse 24 schwenkt, so daß die stellvertretend für andere erste Mittel stehenden Viergelenkketten der Motorspindel nicht mehr in der y-z-Ebene, sondern in einer entsprechend herausgeschwenkten Schwenkebene folgen. Auf diese Weise wird jede durch das Koordinatentriple x, y, z beschreibbare Raumposition aktiv durch lediglich drei in bezug auf das Gestell 2 längenveränderliche Gewindespindeln 62 eingestellt, während sich die Motorspindel 56 auf den passiv folgenden Viergelenkketten 40 und 42, die auf dem Schwenkstück 6 ruhen, abstützt. In Arbeitsteilung binden die in den Spindelmuttern aufgenommenen Gewindespindeln 62 die drei Freiheitsgrade der Verschiebungen längs der kartesischen Achsen und die Viergelenkketten 40 und 42 sowie das Schwenkstück 6 die drei Freiheitsgrade der Drehungen um die kartesischen Achsen. Nichtdargestellte Kompensationsmittel sorgen dafür, daß die Drehwinkellage der Motorspindel beim Schwenken um die Schwenkachse 24 erhalten bleibt. Sie drehen die Motorspindel gegensinnig zur Schwenkbewegung.

## Patentansprüche

1. Werkzeugmaschine, insbesondere Fräsbearbeitungszentrum, mit einem Gestell (2), einem Träger (54) für Werkzeuge und/oder Werkstücke, einer vom Gestell (2) ausgehenden Koppelführung, um den Träger (54) bei Aufrechterhaltung seiner durch eine in einer ersten Ebene befindlichen Ausrichtachse (58) definierten räumlichen Ausrichtung flächenüberstreichend zu führen, und einer vom Gestell (2) ausgehenden Antriebseinrichtung, um den koppelgeführten Träger (54) zu bewegen und festzulegen, wobei wenigstens drei in bezug auf das Gestell (2) längenveränderliche Linearaktoren mit ihren einen Enden an voneinander beabstandeten Gestellpositionen und mit ihren anderen Enden am Träger (54) angelenkt sind, und die wenigstens zwei miteinander verbundene parallelogrammartige Viergelenkketten (40, 42) aufweisende, den Träger (54) tragende Koppelführung in einer die erste Ebene schneidende zweiten Ebene um eine zur Ausrichtachse (58) parallele Schwenkachse (24) schwenkbar ist, wobei die vom Gestell (2) ausgehende Viergelenkkette (40) mit ihren gestellabgewandten Enden und die vom Träger (54) ausgehende Viergelenkkette (42) mit ihren trägerabgewandten Enden in einer gemeinsamen, drei Gelenkachsen (34, 36, 44) aufweisenden Koppel (38) liegen, um deren erste (34) ein erstes Glied (30) der ersten Viergelenkkette (40), um deren zweite (36) sowohl ein zweites Glied (32) der ersten Viergelenkkette (40) als auch ein erstes Glied (46) der zweiten Viergelenkkette (42) und um deren dritte (44) ein zweites Glied (48) der zweiten Viergelenkkette (42) lagern.

2. Werkzeugmaschine nach Anspruch 1, **dadurch gekennzeichnet, dass** die Koppel (38) die Ausrichtung der zweiten Viergelenkkette (42) in bezug auf die Ausrichtung der ersten Viergelenkkette (40) umlenkt.

3. Werkzeugmaschine nach einem der Ansprüche 1 bis 2, **dadurch gekennzeichnet, dass** das erste Glied (46) der zweiten Viergelenkkette (42) und das zweite Glied (32) der ersten Viergelenkkette (40) zur Aufnahme sowohl von Zugund Druckkräften als auch von Biege- und Torsionskräften einen größeren Querschnitt aufweisen, als das jeweils andere erste und zweite Glied (30, 48), die lediglich Zugund Druckkräfte aufnehmen.

4. Werkzeugmaschine nach einem der Ansprüche 1 bis 3, **dadurch gekennzeichnet, dass** jedes Glied (30, 32) der ersten Viergelenkkette (40) und jedes Glied (46, 48) der zweiten Viergelenkkette (42) zwischen einer waagerechten und einer senkrechten Stellung bewegbar ist.

## Claims

1. A machine tool, especially a milling center, with a frame (2), a carrier (54) for tools and/or subjects, a coupling guide starting out from the frame (2) in order to guide the carrier (54) in a surface-covering fashion when maintaining its spatial alignment as defined by an aligning axis (58) situated in a first plane, as well as a drive device originating from the frame (2) in order to move and fix the coupling-guided carrier (54), with at least three linear actuators which are longitudinally adjustable with respect to the frame (2) being linked with their one ends to mutually spaced frame positions and with their other ends to the carrier (54) and the coupling guide which comprises at least two mutually connected, parallelogram-like four-bar chains (40, 42) and supports the carrier (54) is swivelable in a second plane intersecting the first plane about a swiveling axis (24) which is parallel to the aligning axis (58), with the four-bar chain (40) originating from the frame (2) being situated with its ends averted from the frame in a common coupler (38) comprising three articulated axles (34, 36, 44), which also applies to the four-bar chain (42) originating from the carrier (54) with its ends averted from the carrier, about whose first axle (34) there is held a first link (30) of the first four-bar chain (40), about whose second axle (36) there is held both a second link (32) of the first four-bar chain (40) as well as a first link (46) of the second four-bar chain (42) and about whose third axle (44) there is held a second link (48) of the second four-bar chain (42).

2. A machine tool as claimed in claim 1, **characterized in that** the coupler (38) deflects the alignment of the second four-bar chain (42) with respect to the alignment of the first four-bar chain (40).

3. A machine tool as claimed in one of the claims 1 to 2, **characterized in that** the first link (46) of the second four-bar chain (42) and the second link (32) of the first four-bar chain (40) are provided with a larger cross section for absorbing both tensile and pressure forces as well as bending and torsional forces than the respective first and second link (30, 48) which merely absorb tensile and pressure forces.

4. A machine tool as claimed in one of the claims 1 to 3, **characterized in that** each link (30, 32) of the first four-bar chain (40) and each link (46, 48) of the second four-bar chain (42) can be moved between a horizontal and a perpendicular position.

## Revendications

1. Machine-outil, en particulier centre d'usinage par fraisage, avec un bâti (2), un support (54) pour des outils et/ou des pièces, un guide à bielle partant du bâti (2) et destiné à guider le support (54) de façon à balayer une surface en maintenant son orientation spatiale définie autour d'un axe d'orientation (58) situé dans un premier plan, et un dispositif d'entraînement partant du bâti (2) et destiné à déplacer le support (54) guidé par bielle et à l'arrêter, dans laquelle un minimum de trois vérins linéaires à longueur variable par rapport au bâti (2) sont articulés sur le bâti à une extrémité en des positions distantes les unes des autres et sur le support (54) à leur autre extrémité, et le guide à bielle portant le support (54) et présentant au moins deux chaînes cinématiques à quatre joints articulés (40, 42) en forme de parallélogramme reliées entre elles peut pivoter dans un deuxième plan coupant le premier plan autour d'un axe de pivotement (24) parallèle à l'axe d'orientation (58), **caractérisée en ce que** la chaîne à quatre joints articulés (40) partant du bâti (2), par son extrémité orientée à l'opposé du bâti, et la chaîne à quatre joints articulés (42) partant du support (54), par son extrémité orientée à l'opposé du bâti, se trouvent dans une bielle commune (38) présentant trois axes d'articulation (34, 36, 44) dont le premier (34) porte un premier élément (30) de la première chaîne à quatre joints articulés (40), le deuxième (36) un deuxième élément (32) de la première chaîne à quatre joints articulés (40) et un premier élément (46) de la deuxième chaîne à quatre joints articulés (42) et le troisième (44) un deuxième élément (48) de la deuxième chaîne à quatre joints articulés (42).

2. Machine-outil selon la revendication 1, **caractérisée en ce que** la bielle (38) dévie l'orientation de la deuxième chaîne à quatre joints articulés (42) par rapport à l'orientation de la première chaîne à quatre joints articulés (40).

3. Machine-outil selon l'une quelconque des revendications 1 à 2, **caractérisée en ce que** le premier élément (46) de la deuxième chaîne à quatre joints articulés (42) et le deuxième élément (32) de la première chaîne à quatre joints articulés (40) présentent, en vue d'absorber aussi bien des forces de traction et de poussée que des forces de flexion et de torsion, une section plus grande que celle des autres premier et deuxième éléments (30, 48), qui absorbent seulement des forces de traction et de poussée.

4. Machine-outil selon l'une quelconque des revendications 1 à 3, **caractérisée en ce que** chaque élément (30, 32) de la première chaîne à quatre joints articulés (40) et chaque élément (46, 48) de la deuxième chaîne à quatre joints articulés (42) sont mobiles entre une position horizontale et une position verticale.
